# EUROPEAN PATENT APPLICATION

(11) **EP 1 248 139 A2**
(43) Date of publication of application: **09.10.2002**
(21) Application number: 02006315.2
(22) Date of filing: 21.03.2002
(51) Int. Cl.: G02C 9/00

(54) **A main and secondary frame assembled glasses with magnetic component embedded at single side**

(30) Priority: 07.04.2001 CN 01209743 U
(71) Applicant: Wong, Ping-Cheuk, Kowloon, Hong Kong (CN)
(72) Inventor: Wong, Ping-Cheuk, Kowloon, Hong Kong (CN)
(74) Representative: Grättinger & Partner (GbR)

(57) **Abstract**

A main and secondary frame assembled glasses with magnetic component embedded at single side, including main frame (10) and main frame bridge (11), secondary frame (20) and secondary frame bridge (21), wherein further includes: A permanent magnet (13) is embedded in the main frame bridge (11) or the said main frame bridge (11) is made of soft magnetics, accordingly, the secondary frame bridge (21) is made of soft magnetics or in which a permanent magnet is embedded. Upper side of the bridge of the main frame (11) includes a locating hole (12) and the bridge of the secondary frame (21) includes a projecting locating pin (22). Compared with the prior art, the present is of the following advantages: easy manufacture, saving both time and labor, and perfect combined wearing effects.

## Description

This invention relates to a kind of glasses, especially a assembled glasses with a main frame and secondary frame.

Usually, the secondary frame of glasses is mainly used together with the main frame of the original glasses. For instance, the frame of original glasses for a nearsighted person combines with the secondary frame of sunglasses the secondary can be removed. In prior art, most main and secondary assembled glasses are embedded with magnetic components in both their main and secondary frames, which need make slots on the body of the frames, inside which magnetic components will be embedded. If magnetic component is embedded in both main and secondary frames, labor and time spent will double and materials will be wasted. Besides, if magnetic components on the main and secondary frames are too small, it is liable to affecting the combining and wearing effects of the glasses.

In view of the above disadvantages of prior art, an object of the present invention is to provide a main and secondary frame assembled glasses with magnetic component embedded at single side which has the following advantages: easy manufacture, saving both time and labor, and good wearing effects.

The present invention provides a main and secondary frame assembled glasses with magnetic component embedded at single side, including main frame and main frame bridge, secondary frame and secondary frame bridge, wherein further includes:
a permanent magnet is embedded in the main frame bridge or the said main frame bridge is made of soft magnetics, accordingly, the secondary frame bridge is made of soft magnetics or in which a permanent magnet is embedded;
an upperside of the bridge of the main frame includes a locating hole and the bridge of the secondary frame includes a projecting locating pin.

When the secondary frame is associated with the main frame, the locating pin of the bridge of the secondary frame is received in the locating hole of the main frame, thereby further strengthening the connection of the secondary frame with the main frame.

### Brief description of the drawings:

Fig. 1 is three-dimensional of the present invention;
Fig. 2 is breakdown drawing of the present invention;
Fig. 3 is vertical view of the present invention when magnets embedded in the bridge of main frame;
Fig. 4 is cutaway view of the present invention;
Fig. 5 is part cutaway view of the present invention;
Fig. 6 is vertical view of the present invention when magnets embedded in the bridge of secondary frame;
Fig. 7 is sketch map of the behind of the bridge the secondary frame extends downward a hook-shaped edge.

### Detailed description of present invention

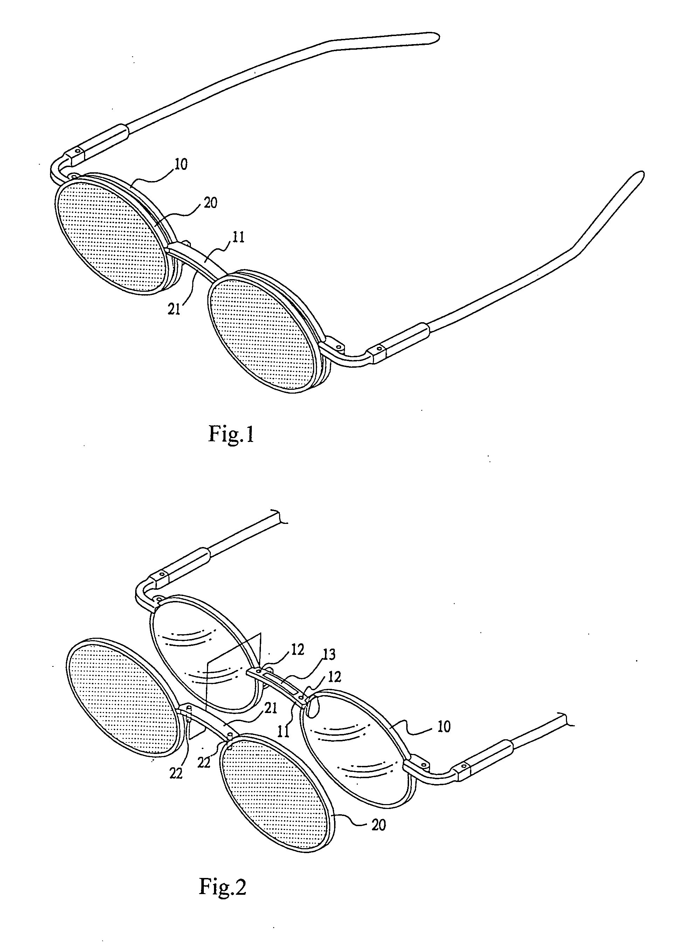

A main and secondary frame assembled glasses with magnetic component embedded at single side, as shown in Fig. 1, 3and 6, including main frame 10 and main frame bridge 11, secondary frame 20 and secondary frame bridge 21, wherein further includes:

a permanent magnet 13 is embedded in the main frame bridge or the said main frame bridge is made of soft magnetics, accordingly, the secondary frame bridge is made of soft magnetics or in which a permanent magnet 23 is embedded.

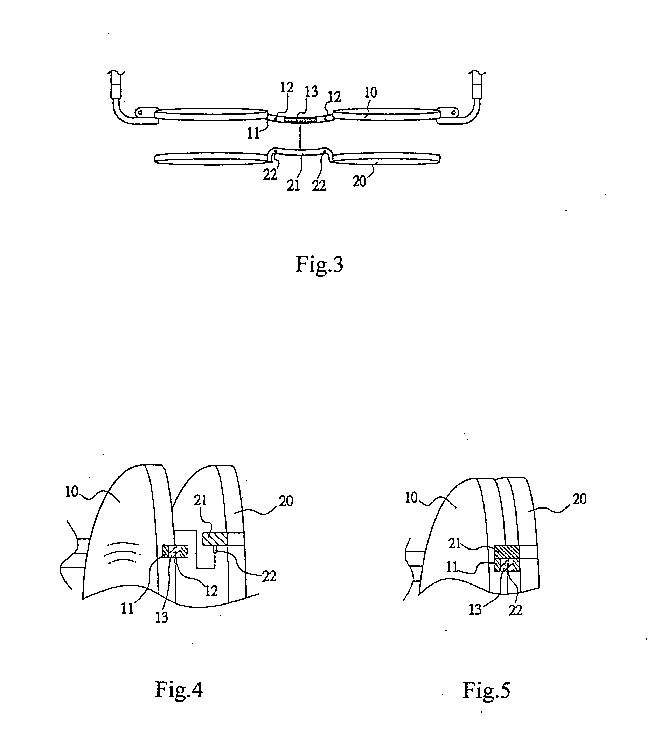

An upperside of the bridge of the main frame includes a locating hole 21 and the bridge of the secondary frame 21 includes a projecting locating pin 22, as shown in Fig. 2 and 3. When the secondary frame 20 assembles main frame 10, the locating pin 22 inserts into the locating hole 21 exactly. In this way, horizontal sliding movement when the secondary frame 20 assembles main frame 10 can be overcome and the main frame and the secondary can combine more firmly.

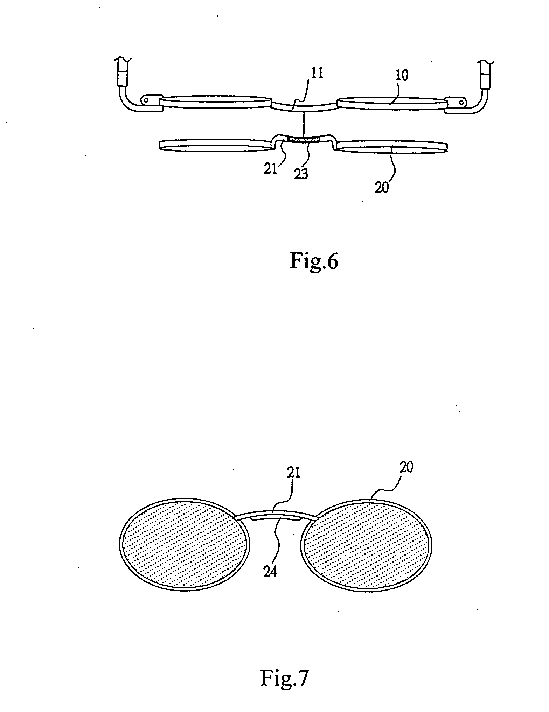

As shown in Fig. 3 and 6, the bridge of secondary frame 21 extends inward to increase firm of the assembled glasses. In order to add area of the permanent magnets to increase attraction between the main and the secondary, the permanent magnetic is designed to a thin bar.

The behind of the bridge the secondary frame 21 extends downward a hook-shaped edge 24, as shown in Fig. 7. When the main assembles with secondary frame, the said hook-shaped edge 24 clips the behind edge of the bridge of main frame 11, thereby the combination between the main frame and the secondary is more exact and stable.

The present invention with magnetic component embedding at single side, compared with the prior art, it is of the following advantages: easy manufacture, saving both time and labor, and perfect combined wearing effects.

## Claims

1. A main and secondary frame assembled glasses with magnetic component embedded at single side, including main frame (10) and main frame bridge (11), secondary frame (20) and secondary frame bridge (21), wherein with characteristics:
a permanent magnet (13) is embedded in the main frame bridge (11) or the said main frame bridge (11) is made of soft magnetics, accordingly, the secondary frame bridge (21) is made of soft magnetics or in which a permanent magnet (23) is embedded;
an upperside of the bridge of the main frame (11) includes a locating hole (12) and the bridge of the secondary frame (21) includes a projecting locating pin (22).

2. A main and secondary frame assembled glasses with magnetic component embedded at single side as claimed 1, wherein the bridge of secondary frame (21) extends inward.

3. A main and secondary frame assembled glasses with magnetic component embedded at single side as claimed 1, wherein the behind of the bridge the secondary frame (21) extends downward a hook-shaped edge (24).

4. A main and secondary frame assembled glasses with magnetic component embedded at single side as claimed 1, wherein the permanent magnetic is a thin bar.
